Europäisches Patentamt

European Patent Office

Office européen des brevets

(19)

(11) Veröffentlichungsnummer: **0 102 466**
**B1**

(12) **EUROPÄISCHE PATENTSCHRIFT**

(45) Veröffentlichungstag der Patentschrift:
05.11.86

(21) Anmeldenummer: 83106238.5

(22) Anmeldetag: 27.06.83

(51) Int. Cl.⁴: **G 02 B 26/10, F 41 G 7/26**

(54) **Vorrichtung zur passiven und aktiven optisch-mechanischen Abtastung eines Sehfeldes.**

(30) Prioritat: 03.08.82 DE 3228914

(43) Veröffentlichungstag der Anmeldung:
14.03.84 Patentblatt 84/11

(45) Bekanntmachung des Hinweises auf die Patenterteilung:
05.11.86 Patentblatt 86/45

(84) Benannte Vertragsstaaten:
CH FR GB IT LI NL SE

(56) Entgegenhaltungen:
DE-A-2 942 181
GB-A-1 413 666
US-A-3 516 743
US-A-4 111 383
US-A-4 111 384

(73) Patentinhaber: EGO Entwicklungsgesellschaft für Optronik mbH, Fördestrasse 35, D-2392 Glücksburg (DE)

(72) Erfinder: Menke, Josef E., Fördestrasse 27, D-2392 Glücksburg (DE)

(74) Vertreter: Ullrich, Thurmod, Dr., Patentanwälte Dr. Ullrich- Dr. Hasse- Dr. Franke Gaisbergstrasse 3, D-6900 Heidelberg 1 (DE)

## Beschreibung

Die Erfindung betrifft eine Vorrichtung mit einem Kanal zur abtastenden Beobachtung eines Sehfeldes, der zur Ausrichtung auf ein Ziel vorgesehen ist und einem Kanal zur Aussendung eines über einen Leitstrahlbereich optisch-mechanisch abtastenden Leitlaserstrahls, der zur Führung eines auf das Ziel zufliegenden Flugkörpers dient und dessen Leitstrahlbereich mit dem Beobachtungsfeld ausgerichtet ist.

Es sind Strahl-Reiterverfahren und -vorrichtungen bekannt, bei denen durch Bewegung einer Modulationsscheibe im Bildfeld eines Projektors die räumliche und zeitliche Modulation des Strahles erfolgt. Diese Verfahrensart hat den Nachteil, daß stets Strahlung ins gesamte Sehfeld gesende wird, d.h. daß sehr starke Lichtquellen benötigt werden. Weiterhin kann der Sender dauernd aus dem gesamten Sehfeld georted werden. Der Nachteil der sehr hohen Sendeleistung kann vermieden werden, wenn das Sehfeld mit einem Laserstrahl rasterförmig abgetastet wird. Arbeiten Laser und Wärmebildgerät im gleichen Spektralbereich, so kann durch Rückstrahlung des Laserlichtes das Wärmebildgerät gestört werden.

Aus US-A-4 111 384 ist ein Leitstrahllenkungssystem bekannt, bei dem die Abtastung in Form einer Nutationsbewegung, d.h. einer Kreiselbewegung erfolgt. Dabei dient der Leitstrahl zur Führung eines Flugkörpers und ein optisches Beobachtungssystem als Zieleinrichtung.

Aufgabe der Erfindung ist es, ein Gerät zur passiven und aktiven Abtastung eines Sehfeldes zu schaffen, das mit kleinen Sendeleistungen auskommt und bei dem eine gegenseitige Beeinflussung von aktivem und passivem Kanal ausgeschlossen ist.

Die Lösung dieser Aufgabe wird durch die technische Lehre vermittelt, daß der Beobachtungskanal ein in zwei Koordinaten optisch-mechanisch abtastendes Wärmebildgerät ist, und der Laserstrahl des Leitstrahlkanals seinen Bereich in zwei Koordinaten abtastet, daß das Wärmebildgerät und der Laserstrahl einen gemeinsamen Spektralbereich aufweisen, und daß bei den Abtastungen in den beiden Kanälen eine solche Phasenbeziehung eingehalten wird, daß die nicht ausnutzbaren, nicht aktiven Zeiten der einen Abtastung auf die aktiven Zeiten der anderen Abtastung fallen und umgekehrt.

Der passive Kanal der Vorrichtung kann ein in kartesischen Koordinaten abtastendes Wärmebildgerät sein, mit dem das Ziel beobachtet und durch Schwenken des Gerätes in Bildmitte, die z.B. durch ein eingeblendetes Fadenkreuz dargestellt ist, gehalten wird. Im aktiven Kanal wird ein Laserstrahl ebenfalls in zwei Richtungen abgelenkt. Die Mitte der Sehfelder von Wärmebildgerät und Laserabtaster sind zur Deckung gebracht. Die Abtastung des Lasers kann kartesisch oder polar erfolgen. Wird bei polarer Abtastung die Radialabtastung mit einem für beide Kanäle gemeinsam genutzten Spiegelpolygon entsprechend der Zeilenfrequenz des Wärmebildgerätes und die Rotation dieser "Speiche" mit einer Reversionsoptik durchgeführt, so erhält man in Bildmitte eine wesentlich erhöhte Informationsdichte.

Erhält beispielsweise ein Flugkörper einen Empfänger für die Laserstrahlung und zusätzlich Informationen über die momentane Phasenlage der Abtastungen in beiden Koordinaten, so kann er seine Position hezüglich der Sehfeldmitte, die ja der Ziellinie entspricht, ermitteln und entsprechende Lenkkommandos erzeugen.

Die Information über Phasenlagen des Laserabtasters kann durch Funk erfolgen. Sie kann aber auch zweckmäßigerweise durch ein quarzgesteuertes Zählwerk, das beim Start mit dem Abtaster synchronisiert wurde, während des Fluges im Flugkörper selbst erzeugt werden.

Liegt die Wellenlänge des Lasers nicht im Spektralbereich des Wärmebildgerätes, so ist eine Beeinflussung des Wärmebildgerätes durch den Laser ausgeschlossen. Jedoch kann es möglich sein, daß aufgrund von meteorologischen Bedingungen die Transparenz der Atmosphäre für den Wärmebildgerätes durch ist, aber im Bereich des Laserkanals so gering, daß eine Lenkung des Flugkörpers nicht mehr möglich ist. Auch der umgekehrte Fall ist möglich. Es erscheint deshalb zweckmäßig, einen Laser zu verwenden, der im Spektralbereich des Wärmebildgerätes sendet. Um eine Störung des Wärmebildgerätes durch den Laser zu vermeiden, wird so vorgegangen: Wärmebildgerät und Laserabtaster werden so ausgelegt, daß die Zeilen- bzw. Radialabtastung jeweils einen Wirkungsgrad von 50 % haben. Unter dem Wirkungsgrad versteht man das Verhältnis der aktiven Zeit zur Gesamtzeit.

Werden nun die Phasenlagen so zueinander gelegt, daß jeweils nur ein Kanal aktiv ist, so ist eine gegenseitige Störung ausgeschlossen.

Nähert sich beispielsweise der Flugkörmer dem Ziel, so wird einerseits der auf den Abtaster bezogene Winkelbereich, in dem sich der Flugkörper bewegen kann/immer kleiner, andererseits wird die Anforderung an die Genauigkeit der übertragenen Ablageinformation immer höher. Die Vorrichtung läßt sich diesen Anforderungen dadurch anpassen, daß im aktiven Laserkanal ein Varioobjektiv verwendet wird, dessen Brennweite während der Flugzeit des Flugkörpers programmgesteuert vergrößert wird. Da hier auch durch Verringerung der Laserdivergenz die Energiedichte der Laserstrahlung erhöht wird, wird gleichzeitig bei vorgegebener Laserleistung die Reichweite erhöht.

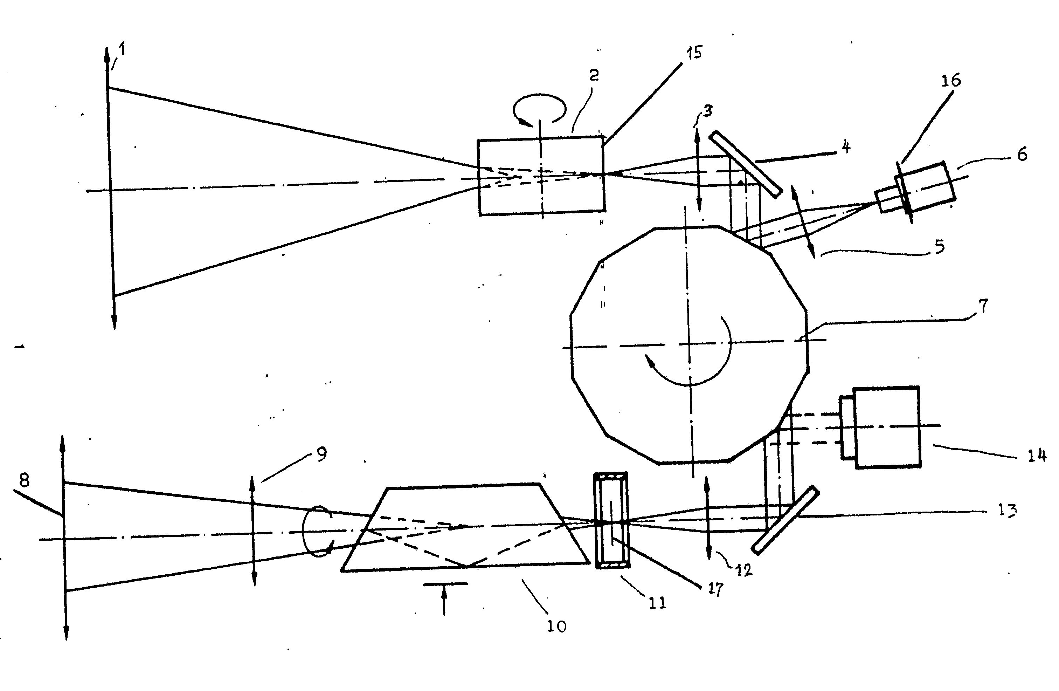

Ein Ausführungsbeispiel ist in der Zeichnung dargestellt:

Die IR-Strahlung gelangt über ein Objektiv 1 auf das Germanium-Polygon 2, auf dessen Hinterkante die Bildebene 15 liegt, Über das Okular 3 und den Umlenkspiegel 4, gelangen die Strahlen dann über das Spiegelpolygon 7 in die Pupille der Detektor-Optik 5 und anschließend auf den Detektor 6 mit dessen Bild- bzw. Detektorelementenebene 16. Die Abtastung des Wärmebildes erfolgt im wesentlichen in zwei zueinander senkrechten Richtungen, wo hierbei die schnelle Abtastung in Zeilenrichtung durch das gemeinsame rotierende Spiegelpolygon 7 und die langsamere Bildfolgeabtastung durch das rotierende refraktive Germanium-Polygon 2 erfolgt.

Der vom CW-Laser 74 ausgehende Strahl gelangt über das auch dem Wärmebildkanal zugeordnete Spiegel-Polygon 7 und den Umlenkspiegel 13 in die Pupille des Teleskop-Okulars 12. Von hier aus wird ein Bild in der Vakuumkammer 11 mit der Bildebene 11 erzeugt. Die fakultativ verwendete Vakuumkammer 11 dient zur Vermeidung von möglichen Ionisationseffekten in der Bildebene 17 des Lasers 14. Über die Reversionsoptik (Dove-Amici-Prisma) wird der Laserstrahl über die Objektivelemente 8 und 9 nach außen geworfen.

Die Ablenkung des Laserstrahls erfolgt in einer Richtung durch das rotierende Spiegelpolygon 7, in Polarer Richtung durch Drehung der Reversionsoptik 10.

## Patentansprüche

1. Vorrichtung mit einem Kanal zur abtastenden Beobachtung eines Sehfeldes der zur Ausrichtung auf ein Ziel vorgesehen ist und einem Kanal zur Aussendung eines über einen Leitstrahlbereich optisch-mechanisch abtastenden Leit-Laserstrahls, der zur Führung eines auf das Ziel zufliegenden Flugkörpers dient und dessen Leitstrahlbereich mit dem Beobachtungsfeld ausgerichtet ist, dadurch gekennzeichnet, daß der Beobachtungskanal ein in zwei Koordinaten optisch-mechanisch abtastendes Wärmebildgerät ist, und der Laserstrahl des Leitstahlkanals seinen Bereich in zwei Koordinaten abtastet, daß das Wärmebildgerät und der Laserstrahl einen gemeinsamen Spektralbereich aufweisen, und daß bei den Abtastungen in den beiden Kanälen eine solche Phasenbeziehung eingehalten wird, daß die nicht ausnutzbaren, nicht aktiven Zeiten der einen Abtastung auf die aktiven Zeiten der anderen Abtastung fallen und umgekehrt.

2. Vorrichtung nach Anspruch 7, dadurch gekennzeichnet, daß mindestens ein optischmechanisches Abtast-Element (7) von beiden Kanälen benutzt wird.

3. Vorrichtung nach Anspruch 1 und 2, dadurch gekennzeichnet, daß das Wärmebildgerät einen Bildaufbau nach CCIR-Norm (Comité Consultatif International des Radiocommunications) liefert.

4. Vorrichtung nach Anspruch 1 bis 3, dadurch gekennzeichnet, daß die optisch-mechanische Abtastung im Laserkanal kartesisch erfolgt.

5. Vorrichtung nach Anspruch 1 bis 3, dadurch gekennzeichnet, daß die optisch-mechanische Abtastung im Laserkanal polar erfolgt.

6. Vorrichtung nach Anspruch 1 bis 5, dadurch gekennzeichnet, daß das dem Laserstrahl vorgeschaltete Objektiv (8, 9) ein Vario-Objektiv ist.

## Claims

1. Device having a channel for the scanning observation of a visual field, which channel is provided for focusing on a target, and a channel for emitting a guide laser beam which scans optomechanically over a guide beam region and is used for guiding a flying body flying towards the target and whose guide beam region is aligned with the observation field, characterised in that the observation channel is a temperature-entropy diagram device which scans optomechanically in two coordinates, and the laser beat of the guide beam channel scans its region in two coordinates, the temperature-entropy diagram device and the laser beam have a common spectral region, and during scanning in both channels, a phase relation is maintained such that the non-usable, passive periods of one scan coincide with the active periods of the other scan and vice versa.

2. Device according to claim 1, characterised in that at least one optomechanical scanning element (7) is used by both channels.

3. Device according to claims 1 and 2, characterised in that the temperature-entropy diagram device supplies a picture synthesis in accordance with CCRI standards (Comité Consultatif International des Radiocommunications).

4. Device according to claims 1 to 3, characterised in that the optomechanical scanning in the laser channel is cartesian.

5. Device according to claims 1 to 3, characterised in that the optomechanical scanning in the laser channel is polar.

6. Device according to claims 1 to 5, characterised in that the lens (8. 9) connected in series with the laser beam is a variable focus lens.

## Revendications

1. Dispositif comportant un canal pour l'observation par balayage d'un champ visuel qui est prévu pour l'orientation sur un but et un canal pour l'émission d'un rayon laser de guidage effectuant un balayage optomécanique sur une plage de rayon de guidage, rayon laser qui sert au guidage d'un corps volant se dirigeant vers le but et dont la plage de ragon de guidage est alignée avec le champ d'observation, caractérisé en ce que le canal d'observation est un appareil à image par rayonnement thermique qui effectue un balayage optomécanique suivant deux coordonnées et le rayon laser du canal du rayon de guidage balaie sa plage suivant deux coordonnées, en ce que l'appareil à image par rayonnement thermique et le ragon laser présentent un domaine spectral commun et en ce que pour les balagages dans les deux canaux, il est respecté un rapport de phases tel que les temps non actifs inutilisables de l'un des balayages coïncident avec les temps actifs de l'autre balagage et vice versa.

2. Dispositif selon la revendication 1, caractérisé en ce qu'au moins un élément de balayage optomécanique (7) est utilisé par les deux canaux.

3. Dispositif selon la revendication 1 ou 2, caractérisé en ce que l'appareil à image par rayonnement thermique fournit une structure d'image correspondant à la norme du CCIR (Comité Consultatif International des Radiocommunications).

4. Disposutif selon l'une quelconque des revendications 1 à 3, caractérisé en ce que le balagage optomécanique dans le canal de laser s'effectue de manière cartésienne.

5. Dispositif selon l'une quelconque des revendications 1 à 3, caractérisé en ce que le balayage optomecanique dans le canal de laser s'effectue de manière polaire.

6. Dispositif selon l'une quelconque des revendications 1 à 5, caractérisé en ce que l'objectif (8, 9) intercalé dans le rayon laser est un objectif à focale variable.